# EUROPÄISCHE PATENTSCHRIFT

(11) **EP 1 214 622 B1**
(45) Veröffentlichungstag und Bekanntmachung des Hinweises auf die Patenterteilung: **02.05.2003**
(21) Anmeldenummer: 00965619.0
(22) Anmeldetag: 22.09.2000
(51) Int. Cl.: G02C 5/22

(54) **SCHARNIERGELENK FÜR EINE BRILLE**
HINGE JOINT FOR EYEGLASSES
ARTICULATION A CHARNIERE POUR LUNETTES

(30) Priorität: 24.09.1999 AT 163199; 11.07.2000 AT 11852000
(43) Veröffentlichungstag der Anmeldung: 19.06.2002
(73) Patentinhaber: SILHOUETTE INTERNATIONAL SCHMIED GMBH & CO. KG., 4021 Linz (AT)
(72) Erfinder: FUCHS, Gerhard, A-4061 Pasching (AT); SPINDELBALKER, Rupert, A-4048 Puchenau (AT)
(74) Vertreter: Hübscher, Helmut, Dipl.-Ing.
(86) Internationale Anmeldenummer: AT0000254
(87) Internationale Veröffentlichungsnummer: WO01023944

(56) Entgegenhaltungen:
- EP-A- 0 814 360
- EP-A- 0 838 711
- WO-A-99/14628
- FR-A- 2 753 283
- GB-A- 2 281 979

## Beschreibung

### Technisches Gebiet

Die Erfindung bezieht sich auf ein Scharniergelenk für eine Brille mit einem als Scharnierachse dienenden Gelenkkörper, der eine koaxiale Umfangsnut zur Aufnahme einer Öse eines Bügelbackens bildet und zwischen zwei zumindest an einem Ende miteinander verbundenen, zu beiden Seiten der Umfangsnut verlaufenden Schenkeln eines Bügelendes drehfest gehalten ist.

### Stand der Technik

Bei einem bekannten Scharniergelenk dieser Art (WO 99/14628 A1) durchsetzen die beiden Schenkel des U-förmig gebogenen Endes des Bügels den vorzugsweise kugelförmigen Gelenkkörper zu beiden Seiten der Umfangsnut, wobei der Verbindungssteg zwischen den beiden Schenkeln des Bügelendes die in der Umfangsnut des Gelenkkörpers geführte, umfangseitig offene Drahtöse des Bügelbackens außen übergreift. Durch diese Maßnahmen wird der Gelenkkörper drehfest zwischen den Schenkeln des U-förmig gebogenen Bügelendes gehalten, dessen die Drahtöse außen umgreifender Verbindungssteg außerdem ein unbeabsichtigtes Ausrasten der Drahtöse aus der Umfangsnut des Gelenkkörpers erschwert. Voraussetzung für eine solche Konstruktion ist allerdings, daß die Drahtöse des Bügelbackens eine ausreichende Biegeelastizität aufweist, um sie durch ein Aufweiten in die Umfangsnut des Gelenkkörpers federnd einrasten zu lassen. Können diese Elastizitätseigenschaften nicht gewährleistet werden, wie dies beispielsweise bei Drahtösen aus einer Goldlegierung oder bei umfangseitig geschlossenen Ösen der Fall ist, so kann diese sonst vorteilhafte Konstruktion nicht eingesetzt werden.

Ähnliche Nachteile ergeben sich bei einer anderen bekannten Konstruktion (GB 2 281 979 A), bei der der von der Drahtöse umgriffene Gelenkkörper des Scharniergelenkes nicht kugelförmig, sondern in Form einer Scheibe ausgebildet ist, die dem Bügel oder dem Bügelbacken zugeordnet sein kann. Die durch den Bügelbacken bzw. den Bügel gebildete Drahtöse muß wiederum entsprechend aufgeweitet werden, um in die Umfangsnut des scheibenförmigen Gelenkkörpers einrasten zu können, was eine ausreichende Biegeelastizität der Drahtöse voraussetzt.

### Darstellung der Erfindung

Der Erfindung liegt somit die Aufgabe zugrunde, ein Scharniergelenk für eine Brille der eingangs geschilderten Art so auszugestalten, daß umfangseitig offene Drahtösen mit einer beschränkten Biegeelastizität oder umfangseitig geschlossene Ösen eingesetzt werden können, ohne aufwendige Montagebedingungen in Kauf nehmen zu müssen.

Die Erfindung löst die gestellte Aufgabe dadurch, daß der Gelenkkörper aus zwei vorzugsweise scheibenförmigen Teilen besteht, deren Stoßflächen quer zur Schamierachse im Bereich der Umfangsnut verlaufen.

Aufgrund der Teilung des Gelenkkörpers in zwei Teile entlang einer im Bereich der Umfangsnut quer zur Scharnierachse verlaufenden Teilungsfläche braucht die Öse des Bügelbackens nicht entsprechend aufgeweitet zu werden, weil die beiden Teile des Gelenkkörpers von entgegengesetzten Seiten her in Richtung der Scharnierachse in die Öse des Bügelbackens eingesteckt werden können. Die Öse kann daher umfangsseitig offen, aber auch geschlossen ausgebildet sein. Zur Montage des Gelenkkörpers mit der zwischen seinen Teilen gehaltenen Öse des Bügelbackens braucht der Gelenkkörper lediglich zwischen die beiden Schenkel eingesetzt und seine Teile drehfest mit den Schenkeln des Bügelendes verbunden zu werden. Die drehfeste Halterung des Gelenkkörpers stellt eine vorteilhafte Voraussetzung dar, um die Gängigkeit des Scharniergelenkes durch die Reibung zwischen der Öse und dem Gelenkkörper festzulegen.

Zu diesem Zweck können die Teile des Gelenkkörpers an ihren voneinander abgekehrten Stirnseiten parallele Aufnahmenuten für die beiden Schenkel des Bügelendes aufweisen. Um einen solchen Gelenkkörper zwischen die Schenkel des Bügelendes einsetzen zu können, können die Schenkel im Rahmen ihrer Eigenelastizität aufgeweitet werden, so daß die Öse mit dem eingesetzten Gelenkkörper quer zu den Schenkeln eingeführt werden kann. Bei Schenkeln, die nur an einem Ende miteinander verbunden sind, bietet sich auch ein Einschieben des Gelenkkörpers von der offenen Seite der Schenkel her in deren Längsrichtung an. In beiden Fällen ist für die Montage kein gesondertes Werkzeug erforderlich.

Um ein unbeabsichtigtes Verschieben des Gelenkkörpers entlang der Schenkel zu unterbinden, können unterschiedliche Maßnahmen getroffen werden. So wäre beispielsweise eine Verstemmung oder Verklebung zwischen den Schenkeln und dem Gelenkkörper möglich. Besonders einfache Konstruktionsverhältnisse ergeben sich allerdings, wenn der Gelenkkörper in eine Rastausnehmung zumindest eines der Schenkeln einrastbar ist, so daß der Gelenkkörper bloß entlang der Schenkel in die Rastausnehmung verschoben werden muß, um in dieser Rastausnehmung federnd gegen eine weitere Verschiebung festgehalten zu werden. Diese Lösung bietet nicht nur den Vorteil einer werkzeuglosen Montage, sondern auch einer einfachen Lösbarkeit.

Da zum Einsetzen des Gelenkkörpers zwischen den Schenkeln die beiden Teile des Gelenkkörpers so zueinander ausgerichtet werden müssen, daß die Aufnahmenuten auf ihren voneinander abgekehrten Stirnseiten parallel verlaufen, empfehlen sich Maßnahmen, die diese Ausrichtung beim Einführen der beiden Teile des Gelenkkörpers in die Öse des Bügelbackens von entgegengesetzten Seiten sichern. Zu diesem Zweck können die beiden Teile des Gelenkkörpers mit abgestuften Stoßflächen ineinandergreifen, die das axiale Zusammenfügen der beiden Teile nur in der vorgesehenen Ausrichtung der Aufnahmenuten erlauben.

Eine andere Möglichkeit, die Teile des Gelenkkörpers mit den Schenkeln des Bügelendes zu verbinden, ergibt sich dadurch, daß die Schenkel des Bügelendes zu einem Aufnahmeauge miteinander beidseitig verbunden sind, in dem der Gelenkkörper durch einen ihn durchsetzenden Bolzen gehalten ist, und daß die beiden Teile des Gelenkkörpers über in Rastausnehmungen des Aufnahmeauges eingreifende, axial über den Gelenkkörper vorstehende Drehanschläge drehfest gegenüber dem Aufnahmeauge abgestützt sind. Zur Montage des Gelenkkörpers mit der zwischen seinen Teilen gehaltenen Drahtöse wird der Gelenkkörper in das vom Bügelende gebildete Aufnahmeauge eingeführt und in diesem Aufnahmeauge durch einen Bolzen gehalten, der den Gelenkkörper in Richtung der Scharnierachse durchsetzt und mit seinen beidseitig aus dem Scharnierkörper vorstehenden Enden in Bohrungen der Schenkel des Bügelendes eingreift. Da die beiden Teile des Gelenkkörpers über in Rastausnehmungen des Aufnahmeauges eingreifende Drehanschläge drehfest gegenüber dem Bügelende abgestützt sind, wird die Gängigkeit des Scharniergelenkes wiederum durch die Reibung zwischen der Drahtöse und dem Gelenkkörper bestimmt.

Zur Demontage des Scharniergelenkes ist der Gelenkkörper aus dem Aufnahmeauge des Bügelendes zu lösen, was ein Entfernen des den Gelenkkörper durchsetzenden Bolzens erfordert. Dies kann in einfacher Weise dadurch erreicht werden, daß der Bolzen mit einem Gewindeabschnitt versehen wird. Ein in das Bügelende eingeschraubter Gewindebolzen verlangt jedoch ein entsprechendes Muttergewinde im Endstück, was nicht nur den Herstellungsaufwand vergrößert, sondern auch bei einem Abbrechen des Gewindebolzens Schwierigkeiten mit sich bringt. Aus diesem Grunde kann der mit einem selbstschneidenden Gewindeabschnitt versehene Bolzen lediglich in den Gelenkkörper eingeschraubt werden, so daß er mit den beidseitig über den Gelenkkörper vorstehenden Bolzenenden frei drehbar im Bügelende gehalten ist. Diese Maßnahme erübrigt ein Schneiden eines Muttergewindes, wobei durch die Eigenelastizität des Kunststoffs des Gelenkkörpers ein sicherer Halt des Bolzens im Gelenkkörper über den Gewindeabschnitt sichergestellt werden kann. Das Ausschrauben des Bolzens aus dem Gelenkkörper ist einfach, so daß vorteilhafte Konstruktionsverhältnisse geschaffen werden, die darauf beruhen, daß die Teile des Gelenkkörpers über die Drehanschläge drehfest im Bügelende abgestützt werden, so daß auf den Bolzen keine durch die Betätigung des Scharniergelenkes bedingten Drehmomente ausgeübt werden.

### Kurze Beschreibung der Zeichnungen

In der Zeichnung ist der Erfindungsgegenstand beispielsweise dargestellt. Es zeigen
- Fig. 1: ein erfindungsgemäßes Scharniergelenk in einem vereinfachten Schnitt senkrecht zur Scharnierachse,
- Fig. 2: einen Schnitt nach der Linie II-II der Fig. 1,
- Fig. 3: das Scharniergelenk gemäß der Fig. 1 in einer zum Teil aufgerissenen Ansicht senkrecht zur Scharnierachse,
- Fig. 4: eine Ausführungsvariante eines erfindungsgemäßen Scharniergelenkes in einem Teilschnitt durch die Schamierachse,
- Fig. 5: dieses Scharniergelenk in einer Draufsicht in Richtung der Scharnierachse und
- Fig. 6: einen Schnitt nach der Linie VI-VI der Fig. 4.

### Bester Weg zur Ausführung der Erfindung

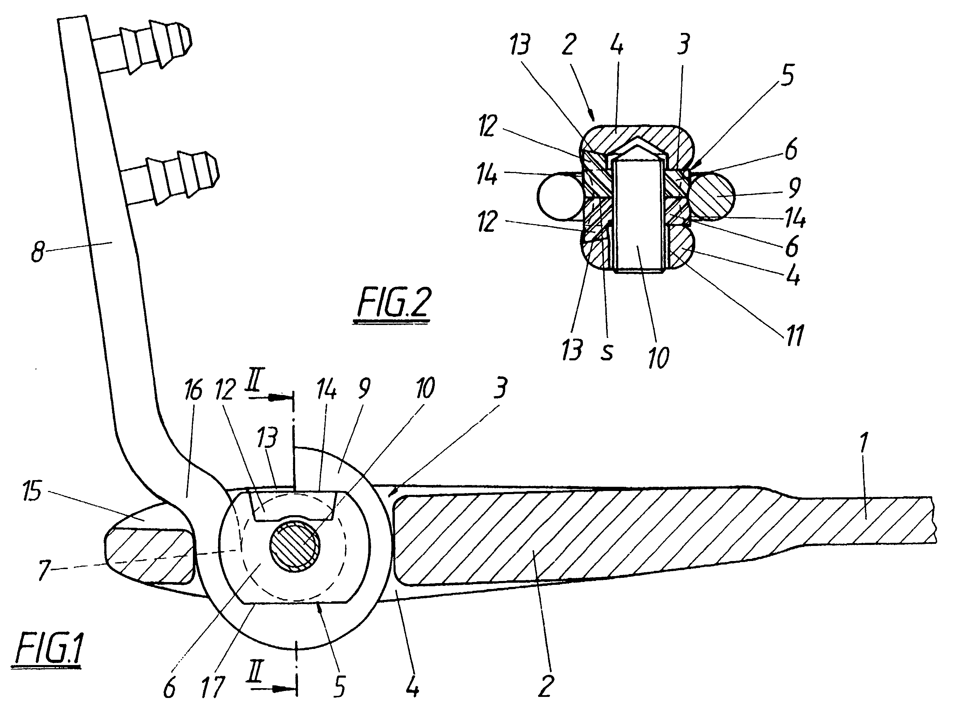

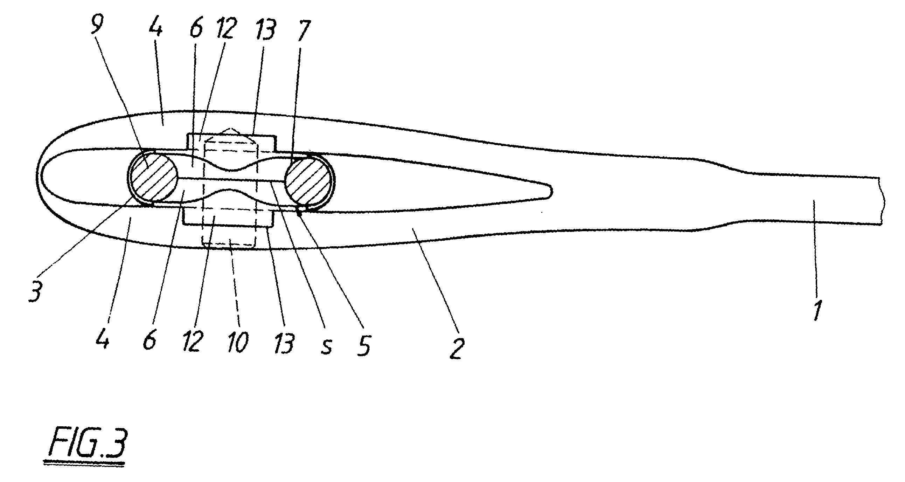

Gemäß dem Ausführungsbeispiel nach den Fig. 1 bis 3 weist der aus Draht gefertigte Bügel 1 ein Ende 2 auf, das zu einem Aufnahmeauge 3 aufgeweitet ist. In das Aufnahmeauge 3, das durch zwei an beiden Enden 2 miteinander verbundene Schenkel 4 gebildet wird, ist ein scheibenförmiger Gelenkkörper 5 eingesetzt, der aus zwei Teilen 6 besteht, die zwischen sich eine Umfangsnut 7 bilden. Die Stoßflächen s zwischen den beiden Teilen 6 verlaufen symmetrisch zur Umfangsnut 7 und senkrecht zu deren Achse, wie dies insbesondere der Fig. 3 entnommen werden kann.

Der Bügelbacken 8 eines nicht näher dargestellten Brillengestells bildet an seinem scharnierseitigen Ende eine umfangsseitig offene Drahtöse 9, die in die Umfangsnut 7 des Gelenkkörpers 5 eingreift. Aus der Fig. 1 kann entnommen werden, daß die Drahtöse 9 die Umfangsnut 7 in einen Winkel von ca. 270° umschlingt, was ein Einführen der Drahtöse 9 in die Umfangsnut 7 des Gelenkkörpers 5 senkrecht zur Achse der Umfangsnut 7 ausschließt, wenn die Drahtöse 9 den Gelenkkörper 5 in der Umfangsnut 7 federnd umfassen soll, um eine entsprechende Gängigkeit des Schamiergelenkes zu erreichen. Aus diesem Grunde werden die Teile 6 des Gelenkkörpers 5 von einander entgegengesetzten Seiten her in axialer Richtung in die Drahtöse 9 eingeführt, wobei die Drahtöse 9 geringfügig federnd aufgeweitet wird. Die in die Umfangsnut 7 des Gelenkkörpers 5 eingreifende Drahtöse 9 wird dann mit dem Gelenkkörper 5 in das Aufnahmeauge 3 des Bügelendes 2 eingesetzt und darin mit Hilfe eines Bolzens 10 fixiert, der den Gelenkkörper 5 durchsetzt und mit seinen axial über den Gelenkkörper 5 vorragenden Enden in die schenkelseitigen Abschnitte einer Sacklochbohrung 11 eingreift, die in den Schenkeln 4 des Bügelendes 2 vorgesehen ist. Die Anordnung ist dabei so getroffen, daß der Bolzen 10 mit einem selbstschneidenden Gewinde lediglich den Lagerkörper 5 formschlüssig durchsetzt, in der Sacklochbohrung 11 aber frei drehbar geführt ist, wie dies durch das Spiel zwischen dem Bolzen 10 und der Sacklochbohrung 11 angedeutet wird.

Um mit einem Verschwenken des Bügels 1 gegenüber dem Bügelbacken 8 ein Mitdrehen des Gelenkkörpers 5 mit der Drahtöse 9 zu verhindern, weisen die Teile 6 des Gelenkkörpers 5 axial gegen die anliegenden Schenkel 4 des Aufnahmeauges 3 vorstehende Drehanschläge 12 auf, die beim Einführen des Gelenkkörpers 5 in das Aufnahmeauge 3 in entsprechende Rastausnehmungen 13 der Schenkel 4 eingreifen und den Gelenkkörper 5 mit dem Bügelende 2 drehfest verbinden.

Zur Montage des Scharniergelenkes braucht nach dem Aufstecken der Teile 6 auf die Drahtöse 9 nur die Drahtöse 9 mit dem Gelenkkörper 5 in das Aufnahmeauge 3 eingeführt und mit dem selbstschneidenden Gewindebolzen 10 im Bügelende 2 festgehalten zu werden, wobei der Bolzen 10 nur den Gelenkkörper 5 gewindeschneidend durchsetzt. In gleicher Weise kann das Scharniergelenk zerlegt werden, weil hiefür bloß der Bolzen 10 aus dem Gelenkkörper 5 herausgeschraubt werden muß.

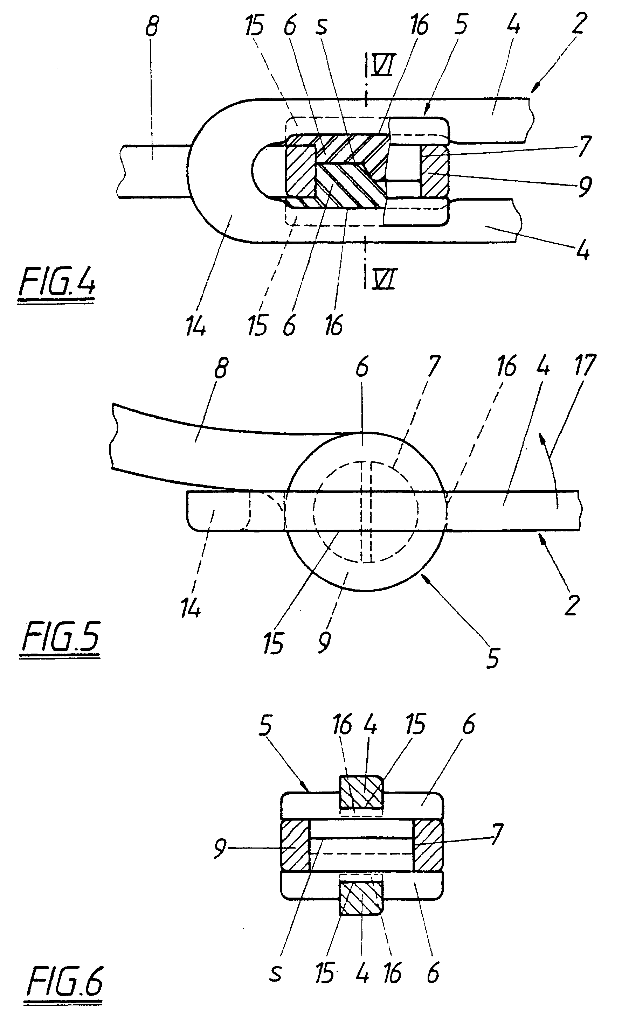

Nach dem Ausführungsbeispiel der Fig. 4 bis 6 bildet das scharnierseitige Bügelende 2 eines nicht näher dargestellten Brillengestells zwei durch einen Verbindungssteg 14 endseitig miteinander verbundene Schenkel 4, die zwischen sich einen Gelenkkörper 5 aufnehmen, der eine Umfangsnut 7 zur Aufnahme einer Ose 9 eines Bügelbackens 8 bildet. Um den Gelenkkörper 5 in die im Ausfuhrungsbeispiel umfangseitig geschlossene Öse 9 in axialer Richtung einsetzen zu konnen, ist der Gelenkkörper 5 in zwei Teile 6 geteilt, wobei die abgestuften Stoßflachen s ineinandergreifen und die beiden Teile 6 in der Öse 9 drehfest zusammenhalten. In der gezeichneten Eingriffsstellung der beiden Teile 6 verlaufen die Aufnahmenuten 15 für die Schenkel 4 auf den voneinander abgekehrten Stirnseiten der beiden Teile 6 parallel zueinander. Der Gelenkkörper 5 kann daher zusammen mit der aufgenommenen Öse 9 so zwischen die Schenkel 4 eingesetzt werden, daß die Schenkel 4 in die Aufnahmenuten 15 des Gelenkkörpers 5 eingreifen und diesen drehfest halten. Die sich zwischen dem Gelenkkörper 5 und der in die Umfangsnut 7 des Gelenkkörpers 5 eingreifenden Öse 9 ergebende Reibung kann daher wiederum vorteilhaft zur Festlegung der Gängigkeit des Schamiergelenkes ausgenützt werden, wofür zwischen dem Gelenkkörper 5, üblicherweise aus Kunststoff, und der metallischen Öse 9 eine entsprechende Passung vorzusehen ist.

Zum Einsetzen des Gelenkkörpers 5 in das Bügelende 2 werden die Schenkel 4 vorzugsweise im Rahmen ihrer Eigenelastizität geringfügig aufgespreizt, um den Gelenkkörper 5 mit der Öse 9 quer zu den Schenkeln 4 zwischen diese einführen zu können, bis die Schenkel 4 in die Aufnahmenuten 15 des Gelenkkörpers 5 eingreifen. Danach kann der Gelenkkörper 5 mit der Öse 9 gegen den Verbindungssteg 14 hin zu einer Rastausnehmung 16 in den Schenkeln 4 verschoben werden. Rastet der Gelenkkörper 5 in diese Rastausnehmungen 16 ein, so wird der Gelenkkörper 5 gegenüber dem Bügelende 2 verschiebefest festgelegt, und zwar mit der einfachen Möglichkeit der Demontage. In dieser Raststellung des Gelenkkörpers 5 bildet der Verbindungssteg 14 zwischen den Schenkeln 4 einen Anschlag für die gestreckte Gebrauchslage des Bügels. aus der er im Sinne des Pfeiles 17 eingeschwenkt werden kann, wie dies der Fig. 5 zu entnehmen ist.

## Patentansprüche

1. Scharniergelenk für eine Brille mit einem eine Öse aufweisenden Bügelbacken, einem zwei Schenkel aufweisendem Bügelende und einem als Scharnierachse dienenden Gelenkkörper (5), der eine koaxiale Umfangsnut (7) zur Aufnahme einer Öse (9) eines Bügelbackens (8) bildet und zwischen zwei zumindest an einem Ende miteinander verbundenen, zu beiden Seiten der Umfangsnut (7) verlaufenden Schenkeln (4) eines Bügelendes (2) drehfest gehalten ist, **dadurch gekennzeichnet, daß** der Gelenkkörper (5) aus zwei vorzugsweise scheibenförmigen Teilen (6) besteht, deren Stoßflächen (s) quer zur Scharnierachse im Bereich der Umfangsnut (7) verlaufen.

2. Scharniergelenk nach Anspruch 1, **dadurch gekennzeichnet, daß** die Teile (6) des Gelenkkörpers (5) an ihren voneinander abgekehrten Stirnseiten parallele Aufnahmenuten (15) für die beiden Schenkel (4) des Bügelendes (2) aufweisen.

3. Scharniergelenk nach Anspruch 1 oder 2, **dadurch gekennzeichnet, daß** der Gelenkkörper (5) in eine Rastausnehmung (16) zumindest eines der Schenkeln (4) des Bügelendes (2) einrastbar ist.

4. Scharniergelenk nach Anspruch 2 oder 3, **dadurch gekennzeichnet, daß** die beiden Teile (6) des Gelenkkörpers (5) mit abgestuften Stoßflächen (s) ineinandergreifen.

5. Scharniergelenk nach Anspruch 1, **dadurch gekennzeichnet, daß** die Schenkel (4) des Bügelendes (2) zu einem Aufnahmeauge (3) miteinander beidseitig verbunden sind, in dem der Gelenkkörper (5) durch einen ihn durchsetzenden Bolzen (10) gehalten ist, und daß die beiden Teile (6) des Gelenkkörpers (5) über in Rastausnehmungen (13) des Aufnahmeauges (3) eingreifende, axial über den Gelenkkörper (5) vorstehende Drehanschläge (12) drehfest gegenüber dem Aufnahmeauge (3) abgestützt sind.

6. Scharniergelenk nach Anspruch 5, **dadurch gekennzeichnet, daß** der mit einem selbstschneidenden Gewindeabschnitt versehene Bolzen (10) lediglich in den Gelenkkörper (5) einschraubbar, mit den beidseitig über den Gelenkkörper (5) vorstehenden Bolzenenden jedoch frei drehbar im Bügelende (2) gehalten ist.

## Claims

1. A hinge for a pair of spectacles comprising a temple jaw formed with a lug, a temple end having two limbs, and a hinge joint member (5) in the form of a coaxial peripheral groove (7) for receiving a lug (9) of a temple jaw (8) and non-rotatably held between two limbs (4) of a temple end (2) extending on the two sides of the peripheral groove (7) and connected together at at least one end, **characterised in that** the hinge member (5) comprises two preferably disc-shaped parts (6) with abutting surfaces (s) extending in the neighbourhood of the peripheral groove (7) transversely of the hinge axis.

2. A hinge according to claim 1, **characterised in that** the parts (6) of the hinge member (5) have parallel grooves (15) at their end faces remote from one another for receiving the two limbs (4) of the temple end (2).

3. A hinge according to claim 1 or 2, **characterised in that** the hinge member (5) can engage in a recess (16) in at least one limb (4) of the temple end (2).

4. A hinge according to claim 2 or 3, **characterised in that** the two parts (6) of the hinge member (5) have interlocking stepped abutment surfaces (s).

5. A hinge according to claim 1, **characterised in that** the limbs (4) of the temple end (2) are connected together at both ends to form a receiving eyelet (3) in which the hinge member (5) is held by a bolt (10) extending through it, and the two parts of the hinge member (5) are non-rotatably braced against the receiving eyelet (3) by rotary stops which engage in catch recesses (13) in the receiving eyelet (3) and project axially beyond the hinge member (5).

6. A hinge according to claim 5, **characterised in that** the bolt (10), formed with a self-cutting threaded portion, can be screwed only into the hinge member (5) but holds the bolt ends projecting on both sides of the hinge member (5), so that they are freely rotatable in the temple end (2).

## Revendications

1. Articulation à charnière pour lunettes, avec un dos de branche, présentant un oeillet, une extrémité de branche présentant deux tiges et un corps d'articulation (5) servant d'axe de charnière, formant une gorge périphérique (7) coaxiale pour loger un oeillet (9) d'un dos de branche (8) et maintenu de façon immobilisée en rotation entre deux tiges (4), reliées ensemble au moins à une extrémité, s'étendant des deux côtés de la gorge périphérique (7), d'une extrémité de branche (2), **caractérisée en ce que** le corps d'articulation (5) est formé de deux parties (6), de préférence discoïdes, dont les faces de joint (s) s'étendent transversalement par rapport à l'axe de charnière dans la zone de la gorge périphérique (7).

2. Articulation à charnière selon la revendication 1, **caractérisée en ce que** les parties (6) du corps d'articulation (5) présentent, sur leurs faces frontales opposées l'une à l'autre, des gorges de logement (15) parallèles, pour les deux tiges (4) de l'extrémité de branche (2).

3. Articulation à charnière selon la revendication 1 ou 2, **caractérisée en ce que** le corps d'articulation (5) est susceptible d'être encliqueté dans un logement d'encliquetage (16) d'au moins l'une des tiges (4) de l'extrémité de branche (2).

4. Articulation à charnière selon la revendication 2 ou 3, **caractérisée en ce que** les deux parties (6) du corps d'articulation (5) s'engagent l'une dans l'autre par des faces de joint (s) étagées.

5. Articulation à charnière selon la revendication 1, **caractérisée en ce que** les tiges (4) de l'extrémité de branche (2) sont reliées ensemble de part et d'autre pour former un oeillet de logement (3), dans lequel le corps d'articulation (5) est maintenu par un boulon (10) le traversant, et **en ce que** les deux parties (6) du corps d'articulation (5) sont soutenues, de façon assujettie en rotation par rapport à l'oeillet de logement (3), par l'intermédiaire de butées de rotation (12) s'engageant dans des évidements d'encliquetage (13) de l'oeillet de logement (3), les butées faisant saillie axialement sur le corps d'articulation (5).

6. Articulation à charnière selon la revendication 5, **caractérisée en ce que** le boulon (10), muni d'un tronçon fileté auto-taraudant, est maintenu, en ne pouvant être vissé que dans le corps d'articulation (5), mais en étant cependant libre de tourner dans l'extrémité de branche (2), par les extrémités de boulon faisant saillie de part et d'autre du corps d'articulation (5).
